# EUROPEAN PATENT SPECIFICATION

(11) **EP 3 905 752 B1**
(45) Date of publication and mention of the grant of the patent: **17.07.2024**
(21) Application number: 19905577.3
(22) Date of filing: 20.11.2019
(51) Int. Cl.: H04W 74/00, H04W 74/0833, H04W 48/12

(54) **METHOD AND DEVICE FOR REPORTING RANDOM ACCESS STATISTICAL INFORMATION**
VERFAHREN UND VORRICHTUNG ZUR MELDUNG VON STATISTISCHEN DIREKTZUGRIFFSINFORMATIONEN
PROCÉDÉ ET DISPOSITIF POUR RAPPORTER DES INFORMATIONS STATISTIQUES D'ACCÈS ALÉATOIRE

(30) Priority: 27.12.2018 CN 201811620322
(43) Date of publication of application: 03.11.2021
(73) Proprietor: Spreadtrum Communications (Shanghai) Co., Ltd., Shanghai 201203 (CN)
(72) Inventor: HAN, Lifeng, Shanghai 201203 (CN); DENG, Yun, Shanghai 201203 (CN)
(74) Representative: Nordmeyer, Philipp Werner
(86) International application number: PCT/CN2019/119627
(87) International publication number: WO 2020/134726

(56) References cited:
- EP-A1- 3 379 886
- CN-A- 101 001 448
- CN-A- 102 077 676
- CN-A- 102 378 380
- CN-A- 103 096 355
- US-A1- 2010 255 847
- US-A1- 2014 241 285
- US-A1- 2018 317 264
- ZTE CORPORATION: "Consideration on necessary information for RACH report", 3GPP TSG-RAN2 MEETING#104 R2-1817807, 16 November 2018 (2018-11-16), XP051557323, DOI: 20200118102807A

## Description

### CROSS-REFERENCE TO RELATED APPLICATIONS

This application claims the priority to Chinese Patent Application No. 201811620322.0, filed on December 27, 2018, and entitled "METHOD AND DEVICE FOR REPORTING RANDOM ACCESS STATISTICAL INFORMATION".

### TECHNICAL FIELD

The present disclosure generally relates to mobile communication field, and more particularly, to a method and device for reporting random access statistical information.

### BACKGROUND

Random access has been widely applied in the mobile communication field. For example, it can be applied to uplink synchronization between terminals and base stations, and Cell Radio Network Temporary Identifier (C-RNTI) and beam recovery. Radio Resource Control (RRC) link establishment, RRC link re-establishment, handover, uplink and downlink data arrival, RRC suspension, beam failure recovery, request for system information and other events will trigger a random access procedure.

In existing techniques, there are two random access procedures: contention-based random access and non-contention-based random access. In contention-based random access, a terminal sends a message (msg) 1 to a base station, the base station sends msg2 to the terminal, the terminal sends msg3 to the base station, and the base station sends msg4 to the terminal. If the terminal recognizes in msg4 that it is a message sent to itself, it is considered that the random access is successful. Another contention-based random access method is a two-step method, that is, the terminal sends msg A to the base station, and the base station sends msg B to the terminal, where a conflict is resolved through the two steps. In non-contention-based random access, the base station allocates dedicated random access resources to the terminal. The terminal sends msg1 (including a dedicated preamble sequence) to the base station, the base station sends msg2 to the terminal, and the terminal receives msg2 and can identify that msg2 is sent to itself, then it is considered that the random access is successful.

US 2014/0241285 A1 discloses a method and a device for processing a random access parameter, so as to properly adjust the random access parameter and improve a success rate of random access includes receiving a random access report of a first cell reported by one or more user terminals, where a random access detection item recorded in the random access report includes: at least one of number of times of preamble cycles in each random access, a reason for preamble transmission failure within each preamble cycle period and a random access delay; performing random access detection item statistics according to the random access report and obtaining a statistical value, if the statistical value reaches a preset threshold, adjusting the random access parameter of the first cell; and issuing the adjusted random access parameter to a user terminal belonging to the first cell.

US 2018/0317264 A1 discloses a communication method and system for converging a fifth generation (5G) communication system for supporting higher data rates beyond a fourth generation (4G) system with a technology for internet of things (IoT) are provided. The communication method and system may be applied to intelligent services based on the 5G communication technology and the IoT-related technology, such as smart home, smart building, smart city, smart car, connected car, health care, digital education, smart retail, security and safety services. A method of a terminal for performing a random access procedure is provided. The method includes transmitting a random access preamble associated with a random access procedure to a base station, receiving a random access response including information on a backoff parameter value from the base station, identifying a scaling factor for backoff based on a priority of the random access procedure or an event which triggers the random access procedure, determining a random backoff time based on the scaling factor and the backoff parameter value, and transmitting a subsequent random access preamble after the random backoff time to the base station.

EP 3 379 886 A1 discloses methods and apparatuses for random access procedures for a system information request in a wireless communication system are disclosed herein. In one method, a user equipment (UE) initiates a random access procedure to request a system information. The UE transmits a random access preamble during the random access procedure. The UE monitors a control channel for a random access response immediately after transmitting the random access preamble for a request of the system information.

In the existing techniques, some statistical information of random access is reported to a network side, but there is no distinction between types of random access. Optimization of random access procedures on the network side requires optimization of different types of random access. Therefore, a new method for reporting statistical information of random access is needed.

### SUMMARY

The invention is set out in the appended set of claims.

Embodiments of the present disclosure may optimize parameters in a random access procedure. In an embodiment of the present disclosure, a method for reporting random access statistical information is provided, including: acquiring statistical information of a random access procedure; and reporting the statistical information and type information to a base station, wherein the type information is used to indicate a random access type corresponding to the statistical information.

Optionally, acquiring the statistical information of the random access procedure includes: receiving configuration information from the base station, wherein the configuration information includes the random access type corresponding to the statistical information; and acquiring the statistical information of the random access procedure based on the configuration information.

Optionally, before reporting the statistical information and the type information to the base station, the method further includes: sending first indication information to the base station, wherein the first indication information is used to indicate that a terminal has statistical information to be reported; and receiving first acknowledgement information from the base station, and determining whether to report the statistical information based on the first acknowledgement information.

Optionally, reporting the statistical information and the type information to the base station includes: sending second indication information to the base station, wherein the second indication information is used to indicate random access types of statistical information that can be reported by the terminal; receiving second acknowledgement information from the base station, wherein the second acknowledgement information is used to indicate the random access type corresponding to the statistical information that the terminal needs to report; and reporting the statistical information and the type information to the base station based on the second acknowledgement information.

The random access type includes ordinary random access, system information request random access and beam failure recovery random access.

Statistical information of the ordinary random access includes one or more of the following: a cell identity; the number of preambles sent during a successful random access procedure; whether a conflict resolution failure has occurred during a successful random access procedure; high-priority random access parameter information; beam information; bandwidth part information; or reason information about a random access failure.

Optionally, the high-priority random access parameter information includes at least one of the following: indication information for use; or a high-priority random access parameter.

Optionally, if bandwidth part IDs of an uplink message and a downlink message sent in the random access procedure are different, the bandwidth part information includes an uplink bandwidth part ID and a downlink bandwidth part ID.

Optionally, the reason information about the random access failure includes: the random access failure being caused by continuous LBT failures.

Optionally, the statistical information of the system information request random access includes one or more of the following: statistical information of random access of system information request through msg1; statistical information of random access of system information request through msg3; a time interval from sending a preamble for requesting system information to receiving corresponding system information; or statistical information of the ordinary random access.

Optionally, indication message information is used to indicate whether the statistical information of random access of system information request through msg1 or msg3 is reported.

Optionally, statistical information of random access of system information request through msg1 includes one or more of the following: the number of random access failures or a failure ratio of random access; a type of system information requested; or preamble information.

Optionally, statistical information of random access of system information request through msg3 includes one or more of the following: the number of random access failures or a failure ratio of random access; or a type of system information requested.

Optionally, the statistical information of the beam failure recovery random access includes one or more of the following: beam failure information; random access resource type information; or statistical information of the ordinary random access.

Optionally, the beam failure information includes one or more of the following: signal quality of a failed beam; signal quality of a beam based on which the random access is initiated; or signal quality of beams in a candidate beam reference signal list.

Optionally, the random access resource type information includes one or more of the following: a resource type used for random access; or timeout information of a beam failure recovery timer.

Optionally, the random access type further includes uplink random access and supplementary uplink random access.

Optionally, uplink indication information is used to indicate whether the reported statistical information is statistical information of the uplink random access or statistical information of the supplementary uplink random access.

Optionally, the statistical information of the uplink random access is reported on an uplink of a cell; or the statistical information of the supplementary uplink random access is reported on a supplementary uplink of the cell.

Optionally, the random access type further includes four-step random access and two-step random access.

Optionally, step indication information is used to indicate whether the statistical information is statistical information of the two-step random access or statistical information of the four-step random access.

Optionally, the statistical information of the four-step random access includes backoff information for backoff from the two-step random access to the four-step random access, and the backoff information includes a number and/or a ratio of back off times within a certain time period.

Optionally, the statistical information of the two-step random access and the four-step random access includes condition information for selecting the two-step random access, and the condition information includes corresponding state information when a terminal satisfies the selection of the two-step random access.

Optionally, reporting the statistical information to the base station includes: determining a signaling radio bearer used for reporting the statistical information of the random access procedure based on the random access type.

Optionally, before reporting the statistical information of the random access procedure to the base station, the method further includes: reporting public land mobile network information corresponding to the statistical information of the random access procedure.

In an embodiment of the present disclosure, a device for reporting random access statistical information is provided, including a memory and a processor, wherein the memory has a computer program stored therein, and when the processor executes the computer program, the above method is performed.

Embodiments of the present disclosure may provide following advantages.

In embodiments of the present disclosure, the configuration information for random access statistics is received from the base station, wherein the configuration information includes the random access type and the corresponding statistical information of the random access procedure that needs to be reported, the random access procedure is performed, statistic is made on the random access procedure based on the configuration information to acquire the statistical information of the random access procedure, and the statistical information is reported to a base station. By reporting the statistical information of various random access types, parameters in the random access procedure may be optimized, so that resource consumption and signaling overhead are reduced, and efficiency of random access is improved.

### BRIEF DESCRIPTION OF THE DRAWINGS

Figure 1 is a flow chart of a method for reporting random access statistical information according to an embodiment; and
Figure 2 is a structural diagram of a device for reporting random access statistical information according to an embodiment.

### DETAILED DESCRIPTION

A Base Station (BS) in embodiments of the present disclosure may also be referred to as a base station equipment, and is a device deployed in a wireless access network to provide wireless communication functions. For example, an equipment that provides a base station function in a 2G network includes a Base Transceiver Station (BTS) and a Base Station Controller (BSC). An equipment that provides the base station function in a 3G network includes a Node B and a Radio Network Controller (RNC). An equipment that provides the base station function in a 4G network includes an evolved node B (eNB). In a Wireless Local Area Network (WLAN), an equipment that provides the base station function is an Access Point (AP). An equipment that provides the base station function in a 5G New Radio (NR) includes a continuously evolved Node B (gNB). And the base station also refers to an equipment that provides the base station function in a new communication system in the future.

A terminal in the embodiments of the present disclosure may refer to various forms of User Equipment (UE), access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

In the embodiments of the present disclosure, a unidirectional communication link from an access network to a terminal is defined as a downlink, data transmitted on the downlink is downlink data, and a transmission direction of the downlink data is referred to as a downlink direction. A unidirectional communication link from the terminal to the access network is an uplink, data transmitted on the uplink is uplink data, and a transmission direction of the uplink data is referred to as an uplink direction.

It should be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure. The "Network" and "system" in the embodiments of the present disclosure represent a same concept, and a communication system is a communication network.

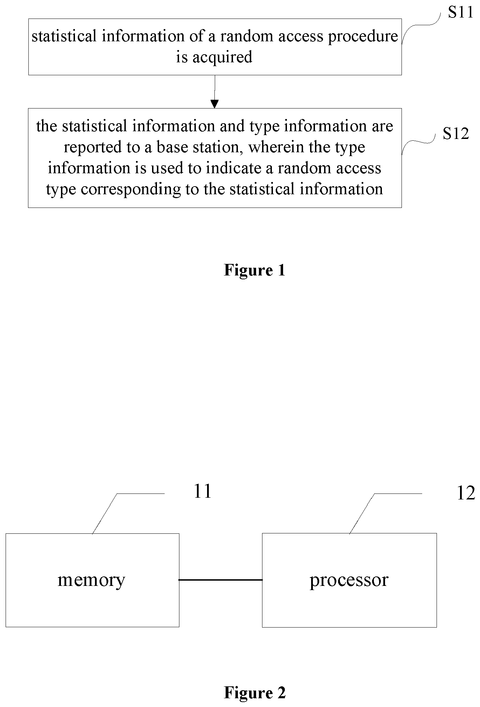

Referring to Figure 1, Figure 1 is a flow chart of a method for reporting random access statistical information according to an embodiment.

In S11, statistical information of a random access procedure is acquired.

In S12, the statistical information and type information are reported to a base station, wherein the type information is used to indicate a random access type corresponding to the statistical information.

In some embodiments, the terminal counts all types of random access procedures to acquire statistical information of the random access procedures, and reports the statistical information of the random access procedures to the base station, wherein the reported information of the terminal further includes type information which is used to indicate the random access type corresponding to the statistical information of the random access procedure.

In some embodiments, acquiring the statistical information of the random access procedure includes: receiving configuration information from the base station, wherein the configuration information includes the random access type corresponding to the statistical information; and acquiring the statistical information of the random access procedure based on the configuration information. That is, the terminal does not need to count all random procedure types, but merely needs to count some random procedure types based on the configuration information to acquire corresponding statistical information.

In some embodiments, before reporting the statistical information and the type information to the base station, the method further includes: sending first indication information to the base station, wherein the first indication information is used to indicate that the terminal has statistical information to be reported; and receiving first acknowledgement information from the base station, and determining whether to report the statistical information based on the first acknowledgement information.

In some embodiments, reporting the statistical information and the type information to the base station includes: sending second indication information to the base station, wherein the second indication information is used to indicate random access types of statistical information that can be reported by the terminal; receiving second acknowledgement information from the base station, wherein the second acknowledgement information is used to indicate the random access type corresponding to the statistical information that the terminal needs to report; and reporting the statistical information and the type information to the base station based on the second acknowledgement information. corresponding to the statistical information that the terminal needs to report; and reporting the statistical information and the type information to the base station based on the second acknowledgement information.

In some embodiments, due to the possibility of channel congestion and a large data amount of statistical information, the terminal does not always need to report all the statistical information. Regardless of whether the terminal receives the configuration information from the base station, before reporting the statistical information and the type information, the terminal may receive indication information from the base station, and report part or all of the statistical information or not report all the information based on the indication information. Therefore, the terminal may count and report random access statistical information according to requirements of the base station, which reduces resource overhead for reporting random access statistical information.

The random access type includes ordinary random access, system information request random access and beam failure recovery random access. The configuration information may include one or more of these random access types.

In some embodiments, the ordinary random access refers to a random access procedure initiated for uplink synchronization or acquisition of C-RNTI, including random access triggered by an RRC protocol layer and a Medium Access Control (MAC) protocol layer. The purpose of the system information request random access is to acquire system information. The purpose of the beam failure recovery random access is to perform beam failure recovery.

Statistical information of the ordinary random access includes one or more of the following: a cell identity; the number of preambles sent during a successful random access procedure; whether a conflict resolution failure has occurred during a successful random access procedure; high-priority random access parameter information; beam information; bandwidth part information; or reason information about a random access failure. The base station may optimize ordinary random access parameters based on the received statistical information of ordinary random access, for example, optimize parameters such as the maximum number of preamble transmission times (preamble TransMax) and power ramping step. The base station may further optimize random access parameter configuration of specific cells, different beams and different BWPs.

In some embodiments, the cell identity may be an identity of a cell where the terminal performs random access.

In some embodiments, the high-priority random access parameter information includes at least one of the following: indication information for use; or a high-priority random access parameter. The indication information for use is used to indicate whether a high-priority parameter is used in the random access procedure. The high-priority random access parameter that needs to be reported is the high-priority parameter used in the random access procedure, and includes at least one of power ramping step high priority and a scaling factor BI of time backoff. The base station may optimize parameters of ordinary random access or high-priority random access. For example, the power ramping step high priority and/or the scaling factor of time backoff may be optimized for high-priority random access.

In some embodiments, the Bandwidth Part (BWP) information refers to a bandwidth part where the random access is initiated, and may be indicated by a BWP number (ID). If bandwidth part IDs of an uplink message and a downlink message sent in the random access procedure are different, the bandwidth part information includes an uplink bandwidth part ID and a downlink bandwidth part ID.

In some embodiments, the reason information about the random access failure includes: the random access failure being caused by continuous LBT failures. The continuous LBT failure refers to an event in which the number of continuous LBT failures reaches a certain threshold, or an event in which all LBT fails within a certain time period. The certain threshold and the certain time period may be configured by the base station side or pre-configured or stipulated by an agreement, which is not limited in the present disclosure. The base station may determine whether to optimize the random access parameters based on the reason for the random access failure. For example, if the random access failure is caused by the LBT failure, the base station may consider not optimizing the random access parameters, as it is the continuous LBT failures caused by channel congestion.

In some embodiments, the terminal counting a system information request random access procedure includes counting procedure information of success and/or failure of the random access to acquire the statistical information of the system information request random access.

In some embodiments, the statistical information of the system information request random access includes one or more of the following: statistical information of random access of system information request through msg1; statistical information of random access of system information request through msg3; a time interval from sending a preamble for requesting system information to receiving corresponding system information; or statistical information of the ordinary random access.

In some embodiments, system information request through msg1 refers to request the system information using msg1 in the random access procedure, and system information request through msg3 refers to request the system information using msg3 in the random access procedure. In some embodiments, indication message information is used by the terminal to indicate whether the statistical information of random access of system information request through msg1 or msg3 is reported.

Statistical information for the random access of system information request through msg1 includes one or more of the following: the number of random access failures or a failure ratio of random access; a type of system information requested (SI1, SI2, SI3 or SI4); or preamble information. The preamble information includes a preamble sent in a random access procedure and a Physical Random Access Channel (PRACH) occasion used for sending the preamble.

Statistical information for the random access of system information request through msg3 includes one or more of the following: the number of random access failures or a failure ratio of random access; or a type of system information requested.

In some embodiments, the statistical information of the system information request random access includes one or more items in the statistical information of the ordinary random access.

By reporting the statistical information of the system information request random access, the network side can optimize the parameters of the system information request random access procedure based on the received statistical information, and can also optimize relevant parameters of msg1 and msg3.

In some embodiments, the terminal counting a beam failure recovery random access procedure includes counting procedure information of success and/or failure of the random access to acquire the statistical information of the beam failure recovery random access and the statistical information of the ordinary random access.

In some embodiments, the statistical information of the beam failure recovery random access includes one or more of the following: beam failure information; random access resource type information; or statistical information of the ordinary random access.

In some embodiments, the beam failure information includes one or more of the following: signal quality of a failed beam; signal quality of a beam based on which the random access is initiated; or signal quality of beams in a candidate beam reference signal list. The signal quality may be represented by Reference Signal Receiving Power (RSRP) or Reference Signal Receiving Quality (RSRQ). The base station may optimize some parameters in a beam failure recovery mechanism based on beam failure information, such as a signal quality threshold for judging the beam failure, and a signal quality threshold of selecting a new beam.

In some embodiments, the random access resource type information includes one or more of the following: a resource type used for random access; or timeout information of a beam failure recovery timer used to indicate whether the beam failure recovery timer expires when the resource type is selected for random access. The random access resource type includes contention-based random access resource and non-contention-based random access resource. The base station may use the resource type information of random access to optimize parameters, for example, optimize a length of the beam failure recovery timer or resource configuration of non-contention-based random access for beam failure recovery.

In some embodiments, the statistical information of beam failure recovery random access may further include the statistical information of ordinary random access described above, which is not described in detail here.

By reporting the statistical information of the beam failure recovery random access, the network side may optimize the parameters of the beam failure recovery random access procedure based on the received statistical information.

From use of resources, the random access type further includes uplink random access and supplementary uplink random access.

The terminal may select whether to initiate random access on the uplink or the supplementary uplink based on a cell signal instruction obtained by measurement. If the terminal initiates random access on the uplink, it is counted as the statistical information for the uplink random access; or if the terminal initiates random access on the supplementary uplink, it is counted as the statistical information for the supplementary uplink random access.

In some embodiments, the terminal reports random access statistical information to the base station, and indicates whether the random access statistical information is counted on the supplementary uplink or on the uplink.

In some embodiments, uplink indication information is used by the terminal to indicate whether the reported statistical information is statistical information of the uplink random access or statistical information of the supplementary uplink random access. For example, the terminal may send the uplink indication information via RRC signaling.

In some embodiments, the terminal may implicitly indicate whether the statistical information is counted on the supplementary uplink or on the uplink. If the terminal reports the statistical information of the uplink random access on the uplink of the cell, it may implicitly indicate that the statistical information of random access is for the uplink. If the terminal reports the statistical information of the supplementary uplink random access on the supplementary uplink of the cell, it may implicitly indicate the statistical information of random access is for the supplementary uplink. The network side may determine whether the statistical information is for the supplementary uplink or the uplink based on the statistical information of random access received from the supplementary uplink or the uplink.

In some embodiments, the statistical information may be statistical information corresponding to the ordinary random access, the system information request random access and the beam failure recovery random access.

The terminal reports the statistical information of random access according to the supplementary uplink and uplink respectively, so that the network side may optimize random access parameters for different uplinks based on the reported statistical information of the supplementary uplink or uplink random access.

In some embodiments, the contention-based random access initiated by the terminal may include four-step random access and two-step random access. The terminal separately counts four-step random access and two-step random access to acquire statistical information of four-step random access and statistical information of two-step random access.

In some embodiments, the terminal may determine whether to initiate two-step random access or four-step random access based on indication of the base station, or based on a condition configured by the network. For example, the base station may configure a threshold for the terminal, and the terminal may initiate a two-step random access when signal quality of a detected cell exceeds the threshold, otherwise, it will initiate a four-step random access.

In a procedure of the two-step random access, the base station may determine whether to back off to the four-step random access. For example, when the base station has merely successfully received a preamble part in msg A, the base station sends msg2 to the terminal, and the terminal considers that it backs off to the four-step random access.

In some embodiments, the terminal reports the statistical information to the base station, and indicates whether the statistical information is the statistical information of the two-step random access or the four-step random access via step indication information.

In some embodiments, the statistical information of the two-step random access or the four-step random access may include statistical information corresponding to the ordinary random access, the system information request random access and the beam failure recovery random access.

In some embodiments, the statistical information of the four-step random access further includes backoff information for backoff from the two-step random access to the four-step random access, and the backoff information includes a number and/or a ratio of backoff times within a certain time period. The certain time period may refer to a time when the terminal receives measurement configuration to a time when the backoff information is reported.

In some embodiments, the statistical information of the two-step random access and the four-step random access includes condition information for selecting the two-step random access, and the condition information includes corresponding state information when a terminal satisfies the selection of the two-step random access. For example, the condition is a threshold, and the terminal initiates two-step random access when the signal quality of the detected cell exceeds the threshold, where the state information refers to the signal quality of the cell detected by the terminal.

The terminal reports the statistical information of the two-step random access and the four-step random access respectively, so that the network side can optimize random access parameters for the two-step or four-step random access, and further optimize the condition for triggering the two-step random access, such as optimizing the threshold for triggering the two-step random access.

In some embodiments, the terminal may report the statistical information of random access to the base station via RRC signaling.

In some embodiments, the statistical information may be reported via at least one of Signaling Radio Bearer (SRB) 1, SRB2, and SRB3.

In some embodiments, the terminal may determine the SRB used for reporting the statistical information based on the random access type. For example, the statistical information of the ordinary random access may be reported via SRB1, and the statistical information of the system information request random access may be reported via SRB2.

In some embodiments, before reporting the statistical information of the random access procedure to the base station, the method further includes: reporting public land mobile network information corresponding to the statistical information of the random access procedure. The base station may determine whether to instruct the terminal to report the random access statistical information of the public land mobile network based on the public land mobile network information in request information reported by the terminal.

Figure 2 is a structural diagram of a device for reporting random access statistical information according to an embodiment. The device is applied in a terminal side. The device includes a memory 11 and a processor 12, where the memory 11 has a computer program stored therein which is used to implement steps of the above method. When the computer program is executed by the processor 12, the above method is performed. The memory 11 may include a Read Only Memory (ROM), a Random Access Memory (RAM), a magnetic disk or an optical disk. The steps of the method can be found in the above descriptions, and are not described in detail here.

It should be understood that, in the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a ROM, a Programmable ROM (PROM), an Erasable PROM (EPROM), an electrically Erasable EPROM (EEPROM), or a flash memory. The volatile memory may be a RAM which functions as an external cache. By way of example but not limitation, various forms of random access memory are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchlink DRAM (SLDRAM), and Direct Rambus RAM (DR RAM). The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire (e.g., infrared, wireless, microwave and etc.). The computer readable storage medium may be any available medium that can be accessed by a computer or a data storage device such as a server or a data center that contains one or more sets of available media. The available medium may be a magnetic medium (e.g., floppy disk, hard disk or magnetic tape), an optical medium (e.g., DVD), or a semiconductor medium. The semiconductor medium may be a solid disk.

It should be understood that, in the various embodiments of the present disclosure, sequence numbers of the above-mentioned processes do not represent an execution sequence, and the execution sequence of each process should be determined by its function and inherent logic, which does not limit an implementation process of the embodiments of the present disclosure.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. Further, the shown or discussed mutual coupling or direct coupling or communication connection may be an indirect coupling or communication connection via some interfaces, devices or units, and may be in an electrical, mechanical or other form. The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit.

The integrated units implemented in the form of the software functional unit may be stored in a computer readable storage medium. The software functional unit is stored in a storage medium and includes several instructions for causing a computer device (a personal computer, a server or a network device) to execute some steps of the methods in the embodiments of the present disclosure. And the storage medium may be a medium for storing program codes, such as a U disk, a removable hard disk, a ROM, a RAM, a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the scope of the present disclosure, without departing from the scope defined by the appended set of claims.

## Claims

1. A method for reporting random access statistical information, applied to a terminal and comprising:
acquiring (S11) statistical information of a random access procedure; and
reporting (S12) the statistical information and type information to a base station, wherein the type information is used to indicate a random access type corresponding to the statistical information,
wherein the random access type comprises ordinary random access, system information request random access and beam failure recovery random access, **characterized in that** statistical information of the ordinary random access, statistical information of the system information request random access and statistical information of the beam failure recovery random access comprise beam information.

2. The method according to claim 1, wherein acquiring the statistical information (S11) of the random access procedure comprises:
receiving configuration information from the base station, wherein the configuration information comprises the random access type corresponding to the statistical information; and
acquiring the statistical information (S11) of the random access procedure based on the configuration information.

3. The method according to claim 1 or 2, wherein reporting the statistical information and the type information (S12) to the base station comprises:
sending second indication information to the base station, wherein the second indication information is used to indicate random access types of statistical information that can be reported by the terminal;
receiving second acknowledgement information from the base station, wherein the second acknowledgement information is used to indicate the random access type corresponding to the statistical information that the terminal needs to report; and
reporting the statistical information and the type information (S12) to the base station based on the second acknowledgement information.

4. The method according to claim 1, wherein statistical information of the ordinary random access further comprises one or more of the following:
a cell identity;
the number of preambles sent during a successful random access procedure;
whether a conflict resolution failure has occurred during a successful random access procedure;
high-priority random access parameter information;
bandwidth part information; or
reason information about a random access failure.

5. The method according to claim 4, wherein the high-priority random access parameter information comprises at least one of the following:
indication information for use; or
a high-priority random access parameter.

6. The method according to claim 4, wherein if bandwidth part IDs of an uplink message and a downlink message sent in the random access procedure are different, the bandwidth part information comprises:
an uplink bandwidth part ID and a downlink bandwidth part ID.

7. The method according to claim 4, wherein the reason information about the random access failure comprises: the random access failure being caused by continuous LBT failures.

8. The method according to claim 1, wherein the statistical information of the system information request random access further comprises one or more of the following:
statistical information of random access of system information request through msg1;
statistical information of random access of system information request through msg3;
a time interval from sending a preamble for requesting system information to receiving corresponding system information; or
statistical information of the ordinary random access except the beam information.

9. The method according to claim 8, wherein indication message information is used to indicate whether the statistical information of random access of system information request through msg1 or msg3 is reported.

10. The method according to claim 8, wherein statistical information of random access of system information request through msg1 comprises one or more of the following:
the number of random access failures or a failure ratio of random access;
a type of system information requested; or
preamble information.

11. The method according to claim 8, wherein statistical information of random access of system information request through msg3 comprises one or more of the following:
the number of random access failures or a failure ratio of random access; or
a type of system information requested.

12. The method according to claim 1, wherein the random access type further comprises uplink random access and supplementary uplink random access.

13. The method according to claim 12, wherein uplink indication information is used to indicate whether the reported statistical information is statistical information of the uplink random access or statistical information of the supplementary uplink random access.

14. The method according to claim 12, wherein the statistical information of the uplink random access is reported on an uplink of a cell; or the statistical information of the supplementary uplink random access is reported on a supplementary uplink of the cell.

15. The method according to claim 1, wherein the random access type further comprises four-step random access and two-step random access.

16. The method according to claim 15, wherein step indication information is used to indicate whether the statistical information is statistical information of the two-step random access or statistical information of the four-step random access.

17. The method according to claim 15, wherein the statistical information of the four-step random access comprises backoff information for backoff from the two-step random access to the four-step random access, and the backoff information comprises a number and/or a ratio of backoff times within a certain time period.

18. The method according to claim 15, wherein the statistical information of the two-step random access and the four-step random access comprises condition information for selecting the two-step random access, and the condition information comprises corresponding state information when a terminal satisfies the selection of the two-step random access.

19. A device for reporting random access statistical information, comprising a memory (11) and a processor (12), wherein the memory (11) has a computer program stored therein, and when the processor (12) executes the computer program, the method of any one of claims 1 to 18 is performed.

## Patentansprüche

1. Verfahren zum Melden statistischer Direktzugriffsinformationen, das auf ein Endgerät angewendet wird und umfasst:
Erfassen (S11) statistischer Informationen über eine Direktzugriffsprozedur; und
Melden (S12) der statistischen Informationen und Typinformationen an eine Basisstation, wobei die Typinformationen verwendet werden, um einen Direktzugriffstyp anzugeben, der den statistischen Informationen entspricht,
wobei der Direktzugriffstyp einen gewöhnlichen Direktzugriff, einen Direktzugriff zur Systeminformationsanforderung und einen Direktzugriff zur Wiederherstellung eines Strahlausfalls umfasst, **dadurch gekennzeichnet, dass** statistische Informationen über den gewöhnlichen Direktzugriff, statistische Informationen über den Direktzugriff zur Systeminformationsanforderung und statistische Informationen über den Direktzugriff zur Wiederherstellung eines Strahlausfalls Strahlinformationen umfassen.

2. Verfahren nach Anspruch 1, wobei das Erfassen der statistischen Informationen (S11) über die Direktzugriffsprozedur umfasst:
Empfangen von Konfigurationsinformationen von der Basisstation, wobei die Konfigurationsinformationen den Direktzugriffstyp umfassen, der den statistischen Informationen entspricht; und
Erfassen der statistischen Informationen (S11) über die Direktzugriffsprozedur basierend auf den Konfigurationsinformationen.

3. Verfahren nach Anspruch 1 oder 2, wobei das Melden der statistischen Informationen und der Typinformationen (S12) an die Basisstation umfasst:
Senden zweiter Angabeinformationen an die Basisstation, wobei die zweiten Angabeinformationen verwendet werden, um Direktzugriffstypen statistischer Informationen anzugeben, die vom Endgerät gemeldet werden können;
Empfangen zweiter Bestätigungsinformationen von der Basisstation, wobei die zweiten Bestätigungsinformationen verwendet werden, um den Direktzugriffstyp anzugeben, der den statistischen Informationen entspricht, die das Endgerät melden muss; und
Melden der statistischen Informationen und der Typinformationen (S12) an die Basisstation basierend auf den zweiten Bestätigungsinformationen.

4. Verfahren nach Anspruch 1, wobei statistische Informationen über den gewöhnlichen Direktzugriff weiter eines oder mehrere der Folgenden umfassen:
eine Zellidentität;
die Anzahl von während einer erfolgreichen Direktzugriffsprozedur gesendeten Präambeln;
ob während einer erfolgreichen Direktzugriffsprozedur ein Konfliktlösungsfehler aufgetreten ist;
Informationen über einen Direktzugriffsparameter mit hoher Priorität;
Bandbreitenteilinformationen; oder
Ursacheninformationen über einen Direktzugriffsfehler.

5. Verfahren nach Anspruch 4, wobei die Informationen über einen Direktzugriffsparameter mit hoher Priorität mindestens eines der Folgenden umfassen:
Angabeinformationen zur Verwendung; oder
einen Direktzugriffsparameter mit hoher Priorität.

6. Verfahren nach Anspruch 4, wobei, wenn Bandbreitenteil-IDs einer Uplink-Nachricht und einer Downlink-Nachricht, die in der Direktzugriffsprozedur gesendet werden, unterschiedlich sind, die Bandbreitenteilinformationen umfassen:
eine Uplink-Bandbreitenteil-ID und eine Downlink-Bandbreitenteil-ID.

7. Verfahren nach Anspruch 4, wobei die Ursacheninformationen über den Direktzugriffsfehler umfassen: den Direktzugriffsfehler, der durch kontinuierliche LBT-Fehler verursacht wird.

8. Verfahren nach Anspruch 1, wobei die statistischen Informationen über den Direktzugriff zur Systeminformationsanforderung weiter eines oder mehrere der Folgenden umfassen:
statistische Informationen über Direktzugriff zur Systeminformationsanforderung über msg1;
statistische Informationen über Direktzugriff zur Systeminformationsanforderung über msg3;
ein Zeitintervall vom Senden einer Präambel zum Anfordern von Systeminformationen bis zum Empfangen korrespondierender Systeminformationen; oder
statistische Informationen über den gewöhnlichen Direktzugriff mit Ausnahme der Strahlinformationen.

9. Verfahren nach Anspruch 8, wobei Angabenachrichteninformationen verwendet werden, um anzugeben, ob die statistischen Informationen über Direktzugriff zur Systeminformationsanforderung über msg1 oder msg3 gemeldet werden.

10. Verfahren nach Anspruch 8, wobei statistische Informationen über Direktzugriff zur Systeminformationsanforderung über msg1 eines oder mehrere der Folgenden umfassen:
die Anzahl von Direktzugriffsfehlern oder eine Fehlerquote beim Direktzugriff;
einen Typ von angeforderten Systeminformationen; oder
Präambelinformationen.

11. Verfahren nach Anspruch 8, wobei statistische Informationen über Direktzugriff zur Systeminformationsanforderung über msg3 eines oder mehrere der Folgenden umfassen:
die Anzahl von Direktzugriffsfehlern oder eine Fehlerquote beim Direktzugriff; oder
einen Typ von angeforderten Systeminformationen.

12. Verfahren nach Anspruch 1, wobei der Direktzugriffstyp weiter einen Uplink-Direktzugriff und einen zusätzlichen Uplink-Direktzugriff umfasst.

13. Verfahren nach Anspruch 12, wobei Uplink-Angabeinformationen verwendet werden, um anzugeben, ob die gemeldeten statistischen Informationen statistische Informationen über den Uplink-Direktzugriff oder statistische Informationen über den zusätzlichen Uplink-Direktzugriff sind.

14. Verfahren nach Anspruch 12, wobei die statistischen Informationen über den Uplink-Direktzugriff über einen Uplink einer Zelle gemeldet werden; oder die statistischen Informationen über den zusätzlichen Uplink-Direktzugriff über einen zusätzlichen Uplink der Zelle gemeldet werden.

15. Verfahren nach Anspruch 1, wobei der Direktzugriffstyp weiter einen vierstufigen Direktzugriff und einen zweistufigen Direktzugriff umfasst.

16. Verfahren nach Anspruch 15, wobei Schrittangabeinformationen verwendet werden, um anzugeben, ob die statistischen Informationen statistische Informationen über den zweistufigen Direktzugriff oder statistische Informationen über den vierstufigen Direktzugriff sind.

17. Verfahren nach Anspruch 15, wobei die statistischen Informationen über den vierstufigen Direktzugriff Backoff-Informationen zum Backoff vom zweistufigen Direktzugriff auf den vierstufigen Direktzugriff umfassen, und die Backoff-Informationen eine Anzahl und/oder ein Verhältnis von Backoff-Malen innerhalb eines bestimmten Zeitraums umfassen.

18. Verfahren nach Anspruch 15, wobei die statistischen Informationen über den zweistufigen Direktzugriff und den vierstufigen Direktzugriff Bedingungsinformationen zum Auswählen des zweistufigen Direktzugriffs umfassen, und die Bedingungsinformationen korrespondierende Zustandsinformationen umfassen, wenn ein Endgerät die Auswahl des zweistufigen Direktzugriffs erfüllt.

19. Vorrichtung zum Melden statistischer Direktzugriffsinformationen, umfassend einen Speicher (11) und einen Prozessor (12), wobei der Speicher (11) ein darin gespeichertes Computerprogramm aufweist, und wenn der Prozessor (12) das Computerprogramm ausführt, das Verfahren nach einem der Ansprüche 1 bis 18 ausgeführt wird.

## Revendications

1. Procédé pour rapporter des informations statistiques d'accès aléatoire, appliqué à un terminal et comprenant :
l'acquisition (S11) d'informations statistiques d'une procédure d'accès aléatoire ; et
le rapport (S12) des informations statistiques et des informations de type à une station de base, dans lequel les informations de type sont utilisées pour indiquer un type d'accès aléatoire correspondant aux informations statistiques,
dans lequel le type d'accès aléatoire comprend un accès aléatoire ordinaire, un accès aléatoire de demande d'informations système et un accès aléatoire de reprise après défaillance de faisceau, **caractérisé en ce que** des informations statistiques de l'accès aléatoire ordinaire, des informations statistiques de l'accès aléatoire de demande d'informations système et des informations statistiques de l'accès aléatoire de reprise après défaillance de faisceau comprennent des informations de faisceau.

2. Procédé selon la revendication 1, dans lequel l'acquisition des informations statistiques (S11) de la procédure d'accès aléatoire comprend :
la réception d'informations de configuration en provenance de la station de base, dans lequel les informations de configuration comprennent le type d'accès aléatoire correspondant aux informations statistiques ; et
l'acquisition des informations statistiques (S11) de la procédure d'accès aléatoire sur la base des informations de configuration.

3. Procédé selon la revendication 1 ou 2, dans lequel le rapport des informations statistiques et des informations de type (S12) à la station de base comprend :
l'envoi de secondes informations d'indication à la station de base, dans lequel les secondes informations d'indication sont utilisées pour indiquer des types d'accès aléatoire d'informations statistiques qui peuvent être rapportées au terminal ;
la réception de secondes informations d'accusé de réception en provenance de la station de base, dans lequel les secondes informations d'accusé de réception sont utilisées pour indiquer le type d'accès aléatoire correspondant aux informations statistiques que le terminal doit rapporter ; et
le rapport des informations statistiques et des informations de type (S12) à la station de base sur la base des secondes informations d'accusé de réception.

4. Procédé selon la revendication 1, dans lequel des informations statistiques de l'accès aléatoire ordinaire comprennent en outre un ou plusieurs des éléments suivants :
une identité de cellule ;
le nombre de préambules envoyés pendant une procédure d'accès aléatoire réussie ;
une mention indiquant si un échec de résolution de conflit s'est produit pendant une procédure d'accès aléatoire réussie ;
des informations de paramètres d'accès aléatoire de haute priorité ;
des informations de partie de largeur de bande ; ou
des informations de motif concernant un échec d'accès aléatoire.

5. Procédé selon la revendication 4, dans lequel les informations de paramètres d'accès aléatoire de haute priorité comprennent au moins l'un des éléments suivants :
des informations d'indication pour une utilisation ; ou
un paramètre d'accès aléatoire de haute priorité.

6. Procédé selon la revendication 4, dans lequel, si identifiants de partie de largeur de bande d'un message de liaison montante et d'un message de liaison descendante envoyés dans la procédure d'accès aléatoire sont différents, les informations de partie de largeur de bande passante comprennent :
un identifiant de partie de largeur de bande de liaison montante et un identifiant de partie de largeur de bande de liaison descendante.

7. Procédé selon la revendication 4, dans lequel les informations de motif concernant l'échec d'accès aléatoire comprennent : l'échec d'accès aléatoire qui est provoqué par des échecs LBT continus.

8. Procédé selon la revendication 1, dans lequel les informations statistiques de l'accès aléatoire de demande d'informations système comprennent en outre un ou plusieurs des éléments suivants :
des informations statistiques d'accès aléatoire de demande d'informations système au moyen du msg1 ;
des informations statistiques d'accès aléatoire de demande d'informations système au moyen du msg3 ;
un intervalle de temps entre l'envoi d'un préambule pour demander des informations système et la réception d'informations système correspondantes ; ou
des informations statistiques de l'accès aléatoire ordinaire à l'exception des informations de faisceau.

9. Procédé selon la revendication 8, dans lequel des informations de messages d'indication sont utilisées pour indiquer si les informations statistiques de l'accès aléatoire de demande d'informations système au moyen du msg1 ou msg3 sont rapportées.

10. Procédé selon la revendication 8, dans lequel des informations statistiques d'accès aléatoire de demande d'informations système au moyen du msg1 comprennent un ou plusieurs des éléments suivants :
le nombre d'échecs d'accès aléatoire ou un taux d'échec d'accès aléatoire ;
un type d'informations système demandées ; ou
des informations de préambule.

11. Procédé selon la revendication 8, dans lequel des informations statistiques d'accès aléatoire de demande d'informations système au moyen du msg3 comprennent un ou plusieurs des éléments suivants :
le nombre d'échecs d'accès aléatoire ou un taux d'échec d'accès aléatoire ; ou
un type d'informations système demandées.

12. Procédé selon la revendication 1, dans lequel le type d'accès aléatoire comprend en outre un accès aléatoire de liaison montante et un accès aléatoire de liaison montante supplémentaire.

13. Procédé selon la revendication 12, dans lequel des informations d'indication de liaison montante sont utilisées pour indiquer si les informations statistiques rapportées sont des informations statistiques de l'accès aléatoire de liaison montante ou des informations statistiques de l'accès aléatoire de liaison montante supplémentaire.

14. Procédé selon la revendication 12, dans lequel les informations statistiques de l'accès aléatoire de liaison montante sont rapportées sur une liaison montante d'une cellule ; ou les informations statistiques de l'accès aléatoire de liaison montante supplémentaire sont rapportées sur une liaison montante supplémentaire de la cellule.

15. Procédé selon la revendication 1, dans lequel le type d'accès aléatoire comprend en outre un accès aléatoire en quatre étapes et un accès aléatoire en deux étapes.

16. Procédé selon la revendication 15, dans lequel des informations d'indication d'étapes sont utilisées pour indiquer si les informations statistiques sont des informations statistiques de l'accès aléatoire en deux étapes ou des informations statistiques de l'accès aléatoire en quatre étapes.

17. Procédé selon la revendication 15, dans lequel les informations statistiques de l'accès aléatoire en quatre étapes comprennent des informations d'attente pour une attente entre l'accès aléatoire en deux étapes et l'accès aléatoire en quatre étapes, et les informations d'attente comprennent un nombre et/ou un rapport de temps d'attente pendant une certaine période de temps.

18. Procédé selon la revendication 15, dans lequel les informations statistiques de l'accès aléatoire en deux étapes et de l'accès aléatoire en quatre étapes comprennent des informations de condition pour sélectionner l'accès aléatoire en deux étapes, et les informations de condition comprennent des informations d'état correspondantes lorsqu'un terminal satisfait à la sélection de l'accès aléatoire en deux étapes.

19. Dispositif pour rapporter des informations statistiques d'accès aléatoire, comprenant une mémoire (11) et un processeur (12), dans lequel la mémoire (11) comporte un programme informatique stocké en son sein et, lorsque le processeur (12) exécute le programme informatique, le procédé selon l'une quelconque des revendications 1 à 18 est réalisé.
